# EUROPÄISCHE PATENTSCHRIFT

(11) **EP 2 989 647 B1**
(45) Veröffentlichungstag und Bekanntmachung des Hinweises auf die Patenterteilung: **23.03.2022**
(21) Anmeldenummer: 14731203.7
(22) Anmeldetag: 12.06.2014
(51) Int. Cl.: H01G 4/38, H01G 2/04

(54) **KONDENSATOREINRICHTUNG**
CAPACITOR DEVICE
DISPOSITIF CONDENSATEUR

(30) Priorität: 20.06.2013 DE 102013211699
(43) Veröffentlichungstag der Anmeldung: 02.03.2016
(73) Patentinhaber: Siemens Energy Global GmbH & Co. KG, 81739 München (DE)
(72) Erfinder: AGRELI, Henrique, 13207-340 Jundiai - SP (BR); CHRISTMANN, Jean Marc, 90427 Nürnberg (DE); HARTMANN, Werner, 91085 Weisendorf (DE); YAMAZAKI, Sergio, 07024-010 Guarulhos (BR)
(86) Internationale Anmeldenummer: PCT/EP2014/062180
(87) Internationale Veröffentlichungsnummer: WO 2014/202446

(56) Entgegenhaltungen:
- WO-A1-2005/059931
- DE-A1- 2 847 775
- DE-A1- 2 937 983
- GB-A- 384 962
- US-A- 3 159 776
- US-A1- 2011 241 704

## Beschreibung

Die Erfindung betrifft eine Kondensatoreinrichtung, umfassend mehrere, jeweils wenigstens zwei Elektroden und wenigstens ein zwischen den Elektroden angeordnetes Dielektrikum umfassende, benachbart angeordnete Kondensatorelemente. Elektrische Kondensatoreinrichtungen weisen typischerweise eine Vielzahl an elektrischen Kondensatorelementen auf, welche in Reihen oder Stapeln benachbart angeordnet sind. Jedes Kondensatorelement ist aus wenigstens zwei Elektroden und wenigstens einem zwischen den Elektroden angeordneten Dielektrikum gebildet. Derartige Kondensatoreinrichtungen werden beispielsweise als Leistungskondensatoren im Bereich der Energietechnik zur Übertragung und Verteilung elektrischer Energie in oder zwischen Energieverteilungsnetzen eingesetzt. Es ist bekannt, dass durch die betriebsbedingt an einer solchen Kondensatoreinrichtung anliegenden Wechselspannungen bzw. betriebsbedingt durch diese fließenden Wechselströme mechanische Schwingungen in der Kondensatoreinrichtung respektive den dieser zugehörigen Komponenten, insbesondere in den Teile jeweiliger Kondensatorelemente bildenden Dielektrika, entstehen können. Die mechanischen Schwingungen können zu einer erheblichen Geräuschentwicklung führen. Die Geräuschentwicklung kann derart hoch sein, dass einschlägige Vorschriften und Grenzwerte überschritten werden.

Bisherige Ansätze zur Reduzierung von betriebsbedingt in entsprechenden Kondensatoreinrichtungen entstehenden mechanischen Schwingungen respektive der daraus resultierenden Geräuschentwicklung sind oftmals nicht zufrieden stellend. WO2005/059931 A1 beschreibt eine bekannte Kondensatoreinrichtung mit mehreren Kondensatorelementen.

Der Erfindung liegt das Problem zugrunde, eine demgegenüber verbesserte Kondensatoreinrichtung anzugeben.

Das Problem wird erfindungsgemäß durch eine Kondensatoreinrichtung mit den Merkmalen des Anspruch 1 gelöst, welche sich dadurch auszeichnet, dass zwischen wenigstens zwei benachbart angeordneten Kondensatorelementen wenigstens ein viskoelastisches Dämpfungselement angeordnet ist.

Das erfindungsgemäße Prinzip basiert auf dem Gedanken, eine aus mehreren, d. h. typischerweise mehreren Dutzend, benachbart angeordneten Kondensatorelementen gebildete Kondensatoreinrichtung mittels zwischen den benachbart angeordneten Kondensatorelementen oder Gruppen benachbart angeordneter Kondensatorelemente angeordneten viskoelastischen Dämpfungselementen in bestimmte respektive bestimmt angeordnete Untereinheiten zu unterteilen. Eine Untereinheit besteht dabei aus einem Kondensatorelement oder einer Gruppe aus mehreren benachbart angeordneten Kondensatorelementen.

Die Größe, d. h. die von einer Untereinheit umfasste Anzahl an Kondensatorelementen, ist durch die Wahl der Positionierung der Dämpfungselemente zwischen den typischerweise reihen- oder stapelartig angeordneten Kondensatorelementen gegeben. Die Anzahl an entsprechenden, zu einer Untereinheit gehörigen Kondensatorelementen ist insbesondere unter Beachtung der Gesamtanzahl der Kondensatorelemente und der damit zusammenhängenden Ausbildungsmöglichkeit entsprechender mechanischer Schwingungen durch die Kondensatoreinrichtung zu wählen. Grundsätzlich ist die Anzahl an entsprechenden, zu einer Untereinheit gehörigen Kondensatorelementen, d. h. die Größe entsprechender Untereinheiten beliebig.

Auch die Art der Anordnung bzw. die die Ordnung der Untereinheiten bestimmende Wahl der Abfolge entsprechender Untereinheiten ist durch die Wahl der Positionierung der Dämpfungselemente zwischen den Kondensatorelementen gegeben. So kann beispielsweise durch eine regelmäßige Abfolge bzw. Anordnung entsprechender Dämpfungselemente zwischen den Kondensatorelementen eine gleichmäßige Aufteilung der Kondensatoreinrichtung in entsprechende Untereinheiten gebildet sein. Eine regelmäßige Abfolge entsprechender Untereinheiten ist insbesondere dann gegeben, wenn zwischen allen unmittelbar benachbart angeordneten Kondensatorelementen wenigstens ein Dämpfungselement angeordnet ist.

Eine unregelmäßige Abfolge bzw. Anordnung entsprechender Dämpfungselemente bildet dementsprechend eine ungleichmäßige Aufteilung der Kondensatoreinrichtung in entsprechende Untereinheiten.

Es ist auch denkbar, dass bestimmte Abschnitte der Kondensatoreinrichtung in regelmäßige und andere Abschnitte der Kondensatoreinrichtung in unregelmäßige Untereinheiten aufgeteilt sind. Betrachtet man die gesamte Kondensatoreinrichtung kann diese sonach zumindest bereichsweise regelmäßig aufeinanderfolgend angeordnete Untereinheiten bzw. zumindest bereichsweise unregelmäßig aufeinanderfolgend angeordnete Untereinheiten umfassen.

Das viskoelastische Dämpfungselement kann vollflächig zwischen zwei benachbart angeordneten Kondensatorelementen angeordnet sein, so dass es deren unmittelbar aneinander angrenzende Flächen jeweils vollständig bedeckt. Denkbar ist es jedoch auch, dass das Dämpfungselement die unmittelbar aneinander angrenzenden Flächen entsprechender Kondensatorelemente nur bereichs- oder teilweise bedeckt. Beispielsweise können ein oder mehrere streifenförmig ausgebildete Dämpfungselemente die unmittelbar aneinander angrenzenden Flächen entsprechender Kondensatorelemente jeweils und insbesondere insgesamt nur bereichsweise bedecken.

Bei einem erfindungsgemäß eingesetzten viskoelastischen Dämpfungselement handelt es sich allgemein um ein Bauteil, das dazu ausgebildet ist, entsprechende betriebsbedingt in der Kondensatoreinrichtung, d. h. insbesondere den Kondensatorelementen, entstehende mechanische Schwingungen zu dämpfen, d. h. zumindest abzuschwächen. Ein viskoelastisches Dämpfungselement kann demnach dazu ausgebildet sein, entsprechende mechanische Schwingungen zumindest teilweise zu absorbieren, um deren mechanische Schwingungsenergie beispielsweise in thermische Energie umzuwandeln. Die viskoelastischen Eigenschaften und somit das viskoelastische Verhalten des viskoelastischen Dämpfungselements weist sonach einen hohen viskosen Anteil und somit ein hohes Absorptionsvermögen gegenüber entsprechenden, betriebsbedingt entstehenden Schwingungen innerhalb der Kondensatoreinrichtung bzw. der Kondensatorelemente auf.

Hieraus ergibt sich, dass das oder die viskoelastischen Dämpfungselemente derart mit den Kondensatorelementen gekoppelt sind, dass die in diesen betriebsbedingt entstehenden mechanischen Schwingungen in die Dämpfungselemente eingeleitet werden können. Sonach sind die Dämpfungselemente zweckmäßig an die sich unmittelbar gegenüber liegend angeordneten Flächen entsprechender Kondensatorelemente unmittelbar angrenzend, d. h. diese kontaktierend, angeordnet.

Insgesamt bietet die Anordnung eines oder mehrerer entsprechender Dämpfungselemente zwischen zwei benachbart angeordneten Kondensatorelementen oder Gruppen benachbart angeordneter Kondensatorelemente die Möglichkeit, diese mechanisch und insbesondere akustisch voneinander zu trennen. Die Möglichkeit der Ausbreitung und Aufaddierung von innerhalb der Kondensatoreinrichtung bzw. entsprechenden Kondensatorelementen gebildeten Schwingungen respektive Schwingungsamplituden ist damit unterbunden bzw. zumindest reduziert. Dies führt zu einer im Vergleich deutlich reduzierten Geräuschentwicklung im Betrieb der Kondensatoreinrichtung. Die erfindungsgemäß vorgesehenen Dämpfungselemente können auch zu einer Verschiebung der betriebsbedingt entstehenden Resonanzfrequenzen in einen höheren Frequenzbereich führen.

Insbesondere führt die Aufteilung der Kondensatoreinrichtung in entsprechende Untereinheiten, d. h. z. B. kleinen Gruppen von Kondensatorelementen, zu einer Verschiebung der Resonanzfrequenz der jeweiligen Untereinheit bzw. Gruppe von Kondensatorelementen zu höheren Frequenzen hin, wodurch der Geräuschpegel im Bereich niedrigerer Frequenzen überproportional abnimmt. Da im Bereich höherer Frequenzen eine deutlich geringere Anregung der Schwingungen erfolgt, wird somit durch die Aufteilung der Kondensatoreinrichtung in entsprechende Kondensatorelemente oder Gruppen von Kondensatorelementen der gesamte betriebsbedingt entstehende Geräuschpegel erheblich verringert. Den viskoelastischen Dämpfungselementen kommt damit vorwiegend die Aufgabe bzw. Funktion zu, die einzelnen Kondensatorelemente bzw. Gruppen von Kondensatorelementen akustisch zu entkoppeln, wobei gleichzeitig die für die mechanische Montage notwendigen mechanischen Kräfte durch den, vorzugsweise flächigen, Kontakt zwischen den viskoelastischen Dämpfungselementen und den jeweiligen Kondensatorelementen vermittelt werden.

Sofern mehrere Dämpfungselemente vorgesehen sind, können diese im Vergleich zueinander unterschiedliche viskoelastische Eigenschaften aufweisen bzw. ein unterschiedliches viskoelastisches Verhalten zeigen. Derart ist es möglich, die erfindungsgemäße Kondensatoreinrichtung insbesondere im Hinblick auf typische, insbesondere die an den Kondensatorelementen jeweils im Betrieb anliegenden elektrischen Ladungen betreffende, Betriebsbedingungen bedarfsgerecht und individualisiert mit Dämpfungselementen mit unterschiedlichen viskoelastischen Eigenschaften und somit unterschiedlichem viskoelastischen Verhalten auszustatten. Selbstverständlich ist es auch denkbar, dass alle eingesetzten Dämpfungselemente gleiche viskoelastische Eigenschaften und somit ein gleiches viskoelastisches Verhalten zeigen.

Die viskoelastischen Eigenschaften respektive das viskoelastische Verhalten eines entsprechenden Dämpfungselements bestimmen sich insbesondere durch die konkrete Ausbildung des Dämpfungselements.

Bevorzugt ist das viskoelastische Dämpfungselement aus wenigstens einem viskoelastischen Material oder aus mehreren, gegebenenfalls unterschiedlichen, viskoelastischen Materialien gebildet. Das viskoelastische Dämpfungselement kann auch wenigstens ein viskoelastisches Material oder mehrere, gegebenenfalls unterschiedliche, viskoelastische Materialien umfassen. Grundsätzlich kann es sich bei einem viskoelastischen Dämpfungselement sonach um einen selbst aus einem oder mehreren, gegebenenfalls unterschiedlichen, viskoelastischen Materialen gebildeten Körper handeln. Denkbar ist es jedoch auch, dass ein viskoelastisches Dämpfungselement ein oder mehrere, gegebenenfalls unterschiedliche, viskoelastische Materialien bzw. Körper, z. B. enthalten in einem hierfür vorgesehenen Behältnis, einer Hülle oder dergleichen, umfasst.

Nachfolgend aufgezählte Materialien bzw. Stoffe können sowohl separat als auch in Mischungen als entsprechende viskoelastische Materialien im Sinne der vorliegenden Erfindung aufgefasst werden.

Bei einem das viskoelastische Dämpfungselement bildenden oder von diesem umfassten viskoelastischen Material kann es sich beispielsweise um ein natürliches und/oder synthetisches, insbesondere auf organischem Kunststoff und/oder Silikon basierendes, Elastomermaterial handeln. Das viskoelastische Material kann sonach in Form eines natürlichen oder synthetischen Elastomers vorliegen. Elastomere weisen bezogen auf ihre viskoelastischen Eigenschaften einen vergleichsweise hohen viskosen Anteil und somit ein vergleichsweise hohes Schwingungsabsorptionsvermögen auf und eignen sich insofern gut für den erfindungsgemäß beabsichtigten Einsatz als viskoelastisches Dämpfungselement oder als Teil eines viskoelastischen Dämpfungselements. Es können alle Arten von natürlichen oder synthetischen Elastomeren, Gummis oder Kautschuken verwendet werden. Lediglich beispielhaft wird auf Naturgummi, synthetische, d. h. insbesondere Kunststoff- bzw. Polymer basierte Elastomere und Silikonkautschuke verwiesen.

Um die viskoelastischen Eigenschaften des Elastomermaterials zu beeinflussen, d. h. z. B. den viskosen Anteil der viskoelastischen Eigenschaften zu erhöhen, kann das Elastomermaterial mit organischen und/oder anorganischen, insbesondere partikulären, Füllstoffen gefüllt sein. Form, Größe und Konzentration des oder der Füllstoffe sind dabei grundsätzlich im Hinblick auf den Aufbau einer Kondensatoreinrichtung, d. h. insbesondere die Zusammenstellung der diese bildenden Kondensatorelemente, und die damit in Zusammenhang stehende Möglichkeit der Ausbildung entsprechender mechanischer Schwingungen zu wählen.

Ein das viskoelastische Dämpfungselement bildende oder von diesem umfasste viskoelastische Material kann auch ein zellulares Schaummaterial sein. Schaummaterialien können sich insbesondere aufgrund ihrer netzwerkartigen, zellularen Struktur durch ein hohes Absorptionsvermögen gegenüber entsprechenden mechanischen Schwingungen auszeichnen. Die durch die zellulare Struktur des Schaummaterials gebildeten Zellzwischenräume können mit viskosen Materialen, wie z. B. viskosen Fluiden, gefüllt sein, um den viskosen Anteil bzw. das viskose Verhalten des grundsätzlich viskoelastischen Schaummaterials zu erhöhen.

In diesem Zusammenhang ist es von Vorteil, wenn das Schaummaterial zumindest teilweise offenzellig ist. Die Offenzelligkeit des Schaummaterials erlaubt eine Kommunikation zwischen den durch Zellwandungen begrenzten Zellzwischenräumen, so dass ein viskoses Fluid sich gut innerhalb des Schaummaterials verteilen wie auch in das und aus dem Schaummaterial bewegen kann. Besonders zweckmäßig können die Zellzwischenräume des Schaummaterials zumindest teilweise mit einem die Kondensatorelemente umgebenden Isolationsmedium, insbesondere einem Isolationsöl, gefüllt sein. Das Isolationsmedium, d. h. insbesondere das Isolationsöl, dient sonach zur Einstellung bzw. Erhöhung des viskosen Anteils der viskoelastischen Eigenschaften des Schaummaterials.

Bei dem Schaummaterial kann es sich beispielsweise um einen, insbesondere offenzelligen Kunststoffschaum auf Basis eines schäumbaren Kunststoffs, wie z. B. Polyamid, Polyethylen,

Polypropylen, Polystyrol oder Mischungen der Genannten, handeln.

Ein das viskoelastische Dämpfungselement bildende oder von diesem umfasste viskoelastische Material kann auch ein Textilmaterial sein. Bei dem Textilmaterial kann es sich z. B. um ein Textilgewebe, Textilgestrick oder Textilgewirke handeln. Die viskoelastischen Eigenschaften, d. h. insbesondere deren viskoser Anteil, des Textilmaterials kann insbesondere durch das dieses bildende Material und die Anordnung bzw. Ordnung der Fasern gegeben sein bzw. beeinflusst werden.

Das Textilmaterial kann z. B. ein aus geordneten oder ungeordneten Fasern gebildetes Fasermaterial sein. Es kann sich dabei um ein geordnetes Fasergut, d. h. ein Fasergelege, wie z. B. eine Matte, oder ein ungeordnetes Fasergut, d. h. ein Fasergemenge, wie z. B. einen Filz, handeln. Bei den Fasern kann es sich um Naturfasern, Kunstfasern oder Mischungen der Genannten handeln.

Um einen möglichst hohen viskosen Anteil der viskoelastischen Eigenschaften des Textilmaterials zu realisieren, ist insbesondere die Verwendung einer vergleichsweise wenig elastischen und somit vergleichsweise hoch viskosen Faser in einem möglichst ungeordneten Zustand anzustreben. Die das Textilmaterial bildenden Fasern können lose miteinander verbunden sein. Um den viskosen Anteil der viskoelastischen Eigenschaften des Textilmaterials zu erhöhen, kann das Textilmaterial zudem mit einem viskosen Medium, wie z. B. einem elastischen bzw. gummiartigen Harz oder einer viskosen Flüssigkeit, getränkt sein. Entsprechend ist es auch hier denkbar, dass das Textilmaterial zumindest teilweise mit einem die Kondensatorelemente umgebenden Isolationsmedium, insbesondere einem Isolationsöl, getränkt ist.

Das viskoelastische Dämpfungselement ist eine lose Stoffschüttung aus wenigstens einem Schüttmaterial.

Die viskoelastischen Eigenschaften, d. h. insbesondere deren viskoser Anteil, kann insbesondere durch Art, Größe und Verteilung sowie die sich hieraus im Wesentlichen ergebende Dichte des die Stoffschüttung bildenden Schüttmaterials (Schüttguts) gegeben sein bzw. beeinflusst werden.

Das Schüttmaterial kann beispielsweise aus organischen und/oder anorganischen, insbesondere partikel- und/oder faserförmigen, Schüttstoffen bestehen. Die Schüttstoffe können sonach z. B. in Form von anorganischen Partikeln aus Keramik und/oder Siliziumoxid und/oder organischen Partikeln aus Kunststoff, insbesondere Elastomeren, bestehen.

Die bezüglich der Ausführungsformen des viskoelastischen Materials als Schaummaterial oder Textilmaterial genannte Möglichkeit der Tränkung mit einem viskosen Fluid, d. h. insbesondere einem die Kondensatorelemente umgebenden Isolationsmediums, wie einem Isolationsöl, ist auch bezüglich des viskoelastischen Materials als Schüttmaterial realisierbar. In diesem Zusammenhang ist es zweckmäßig, wenn das Schüttmaterial in einem Behältnis aufgenommen ist, welches für ein die Kondensatorelemente umgebendes Isolationsmedium, insbesondere ein Isolationsöl, durchlässig ist. Bei dem Behältnis kann es sich beispielsweise um einen perforierten Beutel aus Kunststoff handeln, wobei die Größe der Perforationen so gewählt ist, dass das innerhalb des Beutels befindliche Schüttmaterial nicht aus dem Beutel gelangen kann, wohingegen das Isolationsfluid durch die Perforationen in das Innere des Beutels gelangen kann, so dass das Schüttmaterial mit dem Isolationsfluid getränkt werden kann. Durch das zwischen die das Schüttmaterial bildenden Schüttstoffe gelangte Isolationsfluid können gegebenenfalls vorhandene Zwischenräume zwischen den Schüttstoffen gefüllt werden.

Für alle Ausführungsformen der erfindungsgemäßen Kondensatoreinrichtung gilt, dass das das viskoelastische Dämpfungselement bildende oder von diesem umfasste viskoelastische Material derart, insbesondere gegenüber thermischen und/oder gegebenenfalls korrosiven Einflüssen, stabil ist, dass es unter den Betriebsbedingungen der erfindungsgemäßen Kondensatoreinrichtung nicht beschädigt wird.

Für alle Ausführungsformen der erfindungsgemäßen Kondensatoreinrichtung gilt ferner, dass eine erfindungsgemäße Kondensatoreinrichtung neben den beschriebenen Kondensatorelementen typischerweise ein Gehäuse aufweist, in welchem die Kondensatorelemente reihen- oder stapelartig angeordnet sind. Das Gehäuse kann zumindest teilweise mit einem elektrisch isolierenden Medium, d. h. einem Isolationsmedium, wie z. B. einem Isolationsöl, befüllt sein. Das Gehäuse ist zweckmäßig mit geeigneten elektrischen Anschlusselementen für die innerhalb dieses aufgenommenen Kondensatorelemente ausgestattet. Die Kondensatorelemente können aus einer oder mehreren Lagen elektrisch leitfähiger Folien, wie z. B. Metallfolien, insbesondere aus Aluminium, gebildete Elektroden und ein aus einer oder mehreren Lagen elektrisch isolierender Folien, wie z. B. Kunststofffolien, insbesondere aus Polyethylen, Polypropylen oder Polyethylenterephthalat, gebildetes Dielektrikum umfassen.

Weitere Vorteile und Einzelheiten der vorliegenden Erfindung ergeben sich aus den im Folgenden beschriebenen Ausführungsbeispielen sowie anhand der Zeichnungen. Dabei zeigt:
- Fig. 1 - 4: jeweils eine Prinzipdarstellung einer Schnittansicht durch eine Kondensatoreinrichtung gemäß einem Ausführungsbeispiel, wobei das Ausführungsbeispiel der Fig.4 ein Ausführungsbeispiel der Erfindung ist, während die Ausführungsbeispiele der Fig.1-3 keine Ausführungsbeispiele der Erfindung, aber nützlich zu deren Verständnis sind; und

- Fig. 5: eine schematische Darstellung eines zwischen zwei Kondensatorelementen angeordneten Dämpfungselement.

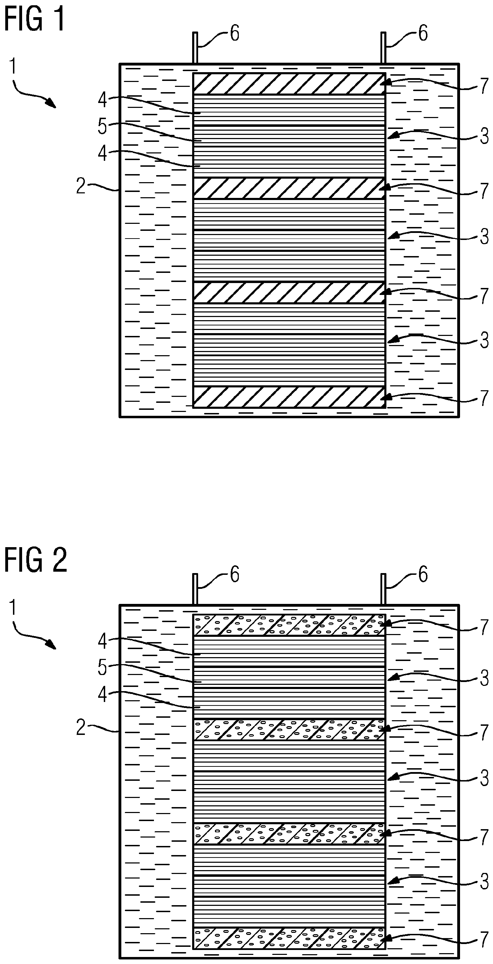

Fig. 1 zeigt eine Prinzipdarstellung einer Schnittansicht durch eine Kondensatoreinrichtung 1 gemäß einem Ausführungsbeispiel.

Die Kondensatoreinrichtung 1 kann beispielsweise als Leistungskondensatoren im Bereich der Energietechnik zur Übertragung und Verteilung elektrischer Energie in oder zwischen Energieverteilungsnetzen eingesetzt werden.

Die Kondensatoreinrichtung 1 umfasst ein quaderförmiges Gehäuse 2. In dem Gehäuse 2 sind mehrere Kondensatorelemente 3 benachbart angeordnet. Wenngleich in Fig. 1 nur drei Kondensatorelemente 3 gezeigt sind, umfasst die Kondensatoreinrichtung 1 eine Vielzahl, d. h. typischerweise mehrere Dutzend, entsprechender Kondensatorelemente 3 in reihen- oder stapelartiger Anordnung.

Jedes Kondensatorelement 3 besteht aus zwei Elektroden 4 zwischen welchen jeweils ein Dielektrikum 5 angeordnet ist. Bei den Elektroden 4 handelt es sich typischerweise um dünne Metallfolien aus Aluminium. Die Elektroden 4 können dabei jeweils mehrere Lagen entsprechender Metallfolien umfassen. Bei dem Dielektrikum 5 handelt es sich typischerweise um dünne Kunststofffolien z. B. aus Polypropylen. Auch das Dielektrikum 5 kann mehrere Lagen entsprechender Kunststofffolien umfassen. Sowohl die die Elektroden 4 bildenden Metallfolien als auch die das Dielektrikum 5 bildenden Kunststofffolien können in gewickelter Form vorliegen. Ein entsprechendes Kondensatorelement 3 kann eine gewickelte Struktur aufweisen. Der die einzelnen Kondensatorelemente 3 aufnehmende, innerhalb des Gehäuses 2 hierfür vorgesehene Aufnahmeraum ist mit einem Isolationsfluid in Form eines Isolationsöls gefüllt. Derart ist es insbesondere möglich, eine elektrische Isolation zwischen den Kondensatorelementen 3 und dem Gehäuse 2 zu realisieren. In diesem Zusammenhang ist es auch denkbar, die den Aufnahmeraum für die Kondensatorelemente 3 definierenden Innenflächen des Gehäuses 2 mit einer elektrisch isolierenden Auskleidung oder Beschichtung zu versehen.

Das Gehäuse 2 ist mit elektrischen Anschlusselementen 6 ausgestattet, welche mit den Kondensatorelementen 3 elektrisch verbunden sind.

Durch die im Betrieb der Kondensatoreinrichtung 1 an den Elektroden 4 der jeweiligen Kondensatorelemente 3 anliegenden elektrischen Ladungen können in den jeweiligen Dielektrika 5 mechanische Spannungen und daraus resultierend mechanische Schwingungen entstehen. Die mechanischen Schwingungen können sich durch die jeweiligen Kondensatorelemente 3 bis auf das Gehäuse 2 ausbreiten und so zu einer erheblichen Geräuschentwicklung führen.

Insbesondere führt ein inniger mechanischer Kontakt benachbart angeordneter Kondensatorelemente 3 zu einer akustischen Kopplung derselben, so dass sich die Resonanzfrequenz der Anordnung bezogen auf die mechanischen Eigenresonanzen eines einzelnen Kondensatorelements 3 hin zu niedrigeren Frequenzen verschieben kann. Da bei niedrigeren Frequenzen im Allgemeinen die Dämpfung deutlich geringer ist als bei hohen Frequenzen, werden insbesondere im Bereich der niedrigen Frequenzen die Schwingungen besonders stark erzeugt und abgestrahlt.

Um dies zu verhindern bzw. zumindest zu reduzieren, sind zwischen den Kondensatorelementen 3 viskoelastische Dämpfungselemente 7 angeordnet. Über die Dämpfungselemente 7 ist eine mechanische wie auch akustische Trennung bzw. Entkopplung einzelner oder mehrerer Kondensatorelemente 3 voneinander realisiert.

Die typischerweise unmittelbar an den Kondensatorelementen 3 anliegenden viskoelastischen Dämpfungselemente 7 sind derart ausgebildet, dass sie die in den Kondensatorelementen 3 betriebsbedingt entstehenden mechanischen Schwingungen zumindest teilweise absorbieren. Die viskoelastischen Eigenschaften der viskoelastischen Dämpfungselemente 7 weisen einen hohen viskosen Anteil auf, um ein hohes Maß an Absorption gegenüber den in den Kondensatorelementen 3 betriebsbedingt entstehenden mechanischen Schwingungen sicherzustellen. Insbesondere kann über die viskoelastischen Dämpfungselemente 7 eine Verschiebung der Resonanzfrequenz der mechanischen Schwingungen hin zu höheren Frequenzbereichen ermöglicht werden.

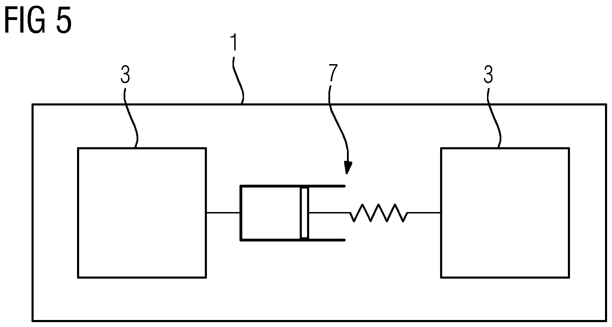

Fig. 5 zeigt eine schematische Darstellung eines zwischen zwei Kondensatorelementen 3 angeordneten viskoelastischen Dämpfungselements 7. Das viskoelastische Verhalten des viskoelastischen Dämpfungselements 7 ist schematisch durch ein Feder-Dämpfer-Modell dargestellt. Bei den erfindungsgemäß eingesetzten viskoelastischen Dämpfungselementen 7 ist, wie erwähnt, grundsätzlich ein viskoelastisches Verhalten mit einem möglichst hohen viskosen Anteil angestrebt, um ein möglichst hohes Absorptionsvermögen gegenüber den in den Kondensatorelementen 3 betriebsbedingt entstehenden mechanischen Schwingungen zu verwirklichen.

Die Anordnung der viskoelastischen Dämpfungselemente 7 zwischen den Kondensatorelementen 3 kann regelmäßig oder unregelmäßig sein. Mithin kann durch die Dämpfungselemente 7 eine regelmäßige oder unregelmäßige Unterteilung der Kondensatoreinrichtung 1 in entsprechende Untereinheiten, welche jeweils aus mindestens einem Kondensatorelement 3 gebildet sind, erfolgen. Gegebenenfalls kann die Anordnung der viskoelastischen Dämpfungselemente 7 zwischen den Kondensatorelementen 3 bezogen auf den Gesamtaufbau der Kondensatoreinrichtung 1, das heißt insbesondere die Gesamtanzahl an den von dieser umfassten Kondensatorelementen 3, auch bereichsweise regelmäßig bzw. bereichsweise unregelmäßig sein. Anzahl und Aufbau der zwischen entsprechenden Kondensatorelementen 3 angeordneten viskoelastischen Dämpfungselemente 7 können ebenso variieren.

Die viskoelastischen Eigenschaften respektive das viskoelastische Verhalten eines entsprechenden viskoelastischen Dämpfungselements 7 basiert darauf, dass dieses aus wenigstens einem oder mehreren, gegebenenfalls unterschiedlichen, viskoelastischen Materialien gebildet ist.

Denkbar ist es auch, dass ein entsprechendes viskoelastisches Dämpfungselement 7 ein oder mehrere, gegebenenfalls unterschiedliche, viskoelastische Materialien umfasst.

Bei dem in Fig. 1 gezeigten Ausführungsbeispiel handelt es sich bei dem das viskoelastische Dämpfungselement 7 bildenden viskoelastischen Material um ein Elastomermaterial. Bei dem Elastomermaterial kann es sich beispielsweise um ein natürliches oder synthetisches Elastomer handeln. Das natürliche Elastomer kann z. B. in Form von Naturgummi bzw. Naturkautschuk vorliegen. Das synthetische Elastomer kann beispielsweise als polymerer Kautschukelastomer oder Silikonkautschuk vorliegen. Das Elastomermaterial kann auch aus Mischungen aus natürlichen und synthetischen Elastomermaterialien gebildet sein.

Es ist denkbar, dass das Elastomermaterial mit organischen und/oder anorganischen, insbesondere partikulären, Füllstoffen gefüllt ist. Bei den Füllstoffen kann es sich z. B. um Kunststoff- und/oder Keramikpartikel handeln. Derart ist eine Einstellung der viskoelastischen und somit akusto-mechanischen Eigenschaften des viskoelastischen Materials möglich, um eine möglichst optimale Absorption und somit Dämpfung der betriebsbedingt in den Kondensatorelementen 3 entstehenden mechanischen Schwingungen zu erhalten. Wiederum ist in diesem Zusammenhang darauf zu hinweisen, dass das das viskoelastische Dämpfungselement 7 bildende viskoelastische Material einen möglichst hohen viskosen Anteil aufweisen soll. Die Füllstoffauswahl und Füllstoffkonzentration ist sonach daran auszurichten, dass sich ein möglichst viskoses Verhalten des viskoelastischen Dämpfungselements 7 einstellt. Fig. 2 zeigt eine Prinzipdarstellung einer Schnittansicht durch eine Kondensatoreinrichtung gemäß einem weiteren Ausführungsbeispiel.

Der wesentliche Unterschied des in Fig. 2 gezeigten Ausführungsbeispiels gegenüber dem in Fig. 1 gezeigten Ausführungsbeispiel besteht in der Ausbildung bzw. Struktur des das viskoelastische Dämpfungselement 7 bildenden viskoelastischen Materials. Bei dem viskoelastischen Material handelt es sich hier um ein zellulares Schaummaterial. Das Schaummaterial weist sonach durch entsprechende Zellwandungen gebildete Zellzwischenräume auf (zellulare Struktur). Das Schaummaterial ist offenzellig, d. h. die Zellstruktur des Schaummaterials ist offen, so dass die einzelnen Zellzwischenräume zumindest teilweise miteinander kommunizieren können. Bei dem Schaummaterial kann es sich beispielsweise um einen Kunststoffschaum auf Basis von Polyethylen, Polypropylen oder Polyamid handeln.

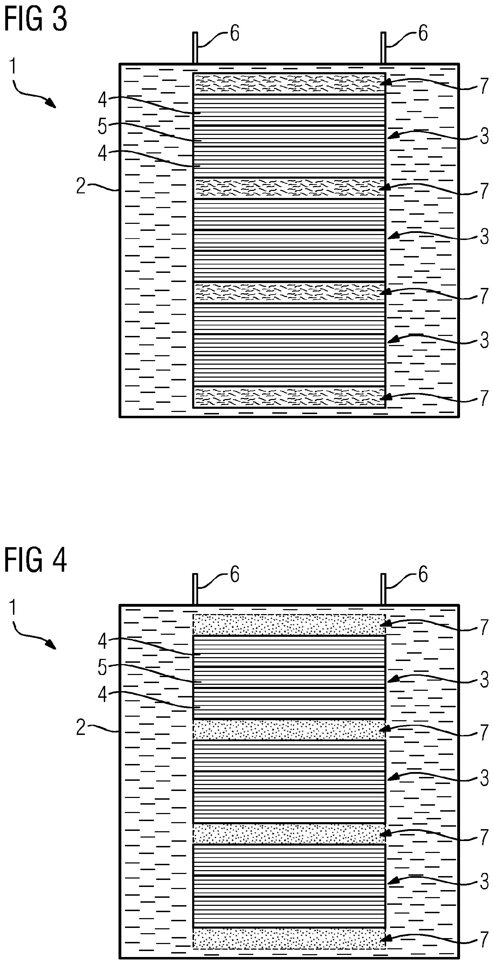

Um den viskosen Anteil der viskoelastischen Eigenschaften des derart ausgebildeten viskoelastischen Dämpfungselements 7 zu erhöhen, ist es zweckmäßig, wenn die Zellzwischenräume des Schaummaterials von dem die Kondensatorelemente 3 umgebenden Isolationsöl durchsetzt sind. Die Zellzwischenräume des Schaummaterials sind sonach mit dem Isolationsöl gefüllt. Das hochviskose Isolationsöl trägt durch seine Bewegung durch die Zellzwischenräume dazu bei, die durch die mechanischen Schwingungen induzierte Bewegung der Zellstruktur zu dämpfen. Bei der in Fig. 3 gezeigten Schnittansicht durch eine Kondensatoreinrichtung 1 gemäß einem weiteren Ausführungsbeispiel handelt es sich bei dem das viskoelastische Dämpfungselement 7 bildenden viskoelastischen Material um ein Textilmaterial. Das Textilmaterial kann grundsätzlich aus geordneten oder ungeordneten Fasern gebildet sein. Es kann sich dabei beispielsweise um ein Filztextil oder eine Textilmatte handeln. Bei den das Textilmaterial bildenden Fasern kann es sich um natürliche und/oder synthetische Fasern handeln. Die viskoelastischen Eigenschaften, das heißt insbesondere deren viskoser Anteil, des Textilmaterials ist wesentlich durch die Art und Ordnung der Fasern bestimmt. Um den viskosen Anteil des Textilmaterials zu erhöhen, ist es auch hier zweckmäßig, dieses mit dem die Kondensatorelemente 3 umgebenden Isolationsöl zu tränken.

Bei dem in Figur 4 gezeigten Ausführungsbeispiel einer Kondensatoreinrichtung 1 umfasst das viskoelastische Element 7 ein, insbesondere ein beutelartiges, Behältnis, in welchem eine lose Stoffschüttung aus einem oder mehreren Schüttmaterialien enthalten ist. Bei dem Schüttmaterial kann es sich um organische und/oder anorganische Schüttstoffe handeln. Die Schüttstoffe können partikel- und/oder faserförmig sein. Denkbar ist es beispielsweise, die Schüttstoffe aus Keramik, Siliziumdioxid und/oder Elastomeren zu bilden.

Das, insbesondere beutelartige, die Schüttmaterialien aufnehmende Behältnis ist umlaufend mit Perforierungen versehen und somit durchlässig für das die Kondensatorelemente 3 umgebende Isolationsöl, so dass auch das innerhalb des Behältnisses befindliche Schüttmaterial mit dem Isolationsöl getränkt werden kann. Derart ist gleichermaßen der viskose Anteil der viskoelastischen Eigenschaften des das viskoelastische Dämpfungselement 7 bildenden viskoelastischen Materials, das heißt hier des Schüttmaterials, erhöhbar.

Für die in den Fig. 1 bis 4 gezeigten Ausführungsbeispiele gilt, dass das das viskoelastische Dämpfungselement 7 bildende oder von diesem umfasste viskoelastische Material derart, insbesondere gegenüber thermischen und/oder gegebenenfalls korrosiven Einflüssen, stabil ist, dass es unter den Betriebsbedingungen der Kondensatoreinrichtung 1 nicht beschädigt wird.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Kondensatoreinrichtung (1), umfassend mehrere, jeweils wenigstens zwei Elektroden (4) und wenigstens ein zwischen den Elektroden (4) angeordnetes Dielektrikum (5) umfassende benachbart angeordnete Kondensatorelemente (3), wobei zwischen wenigstens zwei benachbart angeordneten Kondensatorelementen (3) wenigstens ein viskoelastisches Dämpfungselement (7) angeordnet ist, das die Kondensatorelemente (3) mechanisch und akustisch trennt, **dadurch gekennzeichnet, dass** das Dämpfungselement (7) eine lose Stoffschüttung aus wenigstens einem Schüttmaterial ist.

2. Kondensatoreinrichtung nach Anspruch 1, **dadurch gekennzeichnet, dass** das viskoelastische Dämpfungselement (7) aus wenigstens einem viskoelastischen Material oder aus mehreren unterschiedlichen viskoelastischen Materialien gebildet ist oder wenigstens ein viskoelastisches Material oder mehrere unterschiedliche viskoelastische Materialien umfasst.

3. Kondensatoreinrichtung nach Anspruch 2, **dadurch gekennzeichnet, dass** ein viskoelastisches Material ein natürliches und/oder synthetisches, insbesondere auf organischem Kunststoff und/oder Silikon basierendes, Elastomermaterial ist.

4. Kondensatoreinrichtung nach Anspruch 3, **dadurch gekennzeichnet, dass** das Elastomermaterial mit organischen und/oder anorganischen, insbesondere partikulären, Füllstoffen gefüllt ist.

5. Kondensatoreinrichtung nach einem der Ansprüche 2 bis 4, **dadurch gekennzeichnet, dass** ein viskoelastisches J Z Material ein zellulares Schaummaterial ist.

6. Kondensatoreinrichtung nach Anspruch 5, **dadurch gekennzeichnet, dass** das Schaummaterial zumindest teilweise offenzellig ist.

7. Kondensatoreinrichtung nach Anspruch 6, **dadurch gekennzeichnet, dass** die Zellzwischenräume des Schaummaterials zumindest teilweise mit einem die Kondensatorelemente (3) umgebenden Isolationsmedium, insbesondere einem Isolationsöl, gefüllt sind.

8. Kondensatoreinrichtung nach einem der Ansprüche 2 bis 7, **dadurch gekennzeichnet, dass** ein viskoelastisches Material ein Textilmaterial ist.

9. Kondensatoreinrichtung nach Anspruch 8, **dadurch gekennzeichnet, dass** das Textilmaterial ein aus geordneten oder ungeordneten Fasern gebildetes Fasermaterial ist.

10. Kondensatoreinrichtung nach Anspruch 9, **dadurch gekennzeichnet, dass** das Textilmaterial zumindest teilweise mit einem die Kondensatorelemente (3) umgebenden Isolationsmedium, insbesondere einem Isolationsöl, getränkt ist.

11. Kondensatoreinrichtung nach einem der vorangehenden Ansprüche, **dadurch gekennzeichnet, dass** das Schüttmaterial aus organischen und/oder anorganischen, insbesondere partikel- und/oder faserförmigen, Schüttstoffen besteht.

12. Kondensatoreinrichtung nach Anspruch 11, **dadurch gekennzeichnet, dass** das Schüttmaterial in einem Behältnis aufgenommen ist, welches für ein die Kondensatorelemente (3) umgebendes Isolationsmedium, insbesondere ein Isolationsöl, durchlässig ist.

13. Kondensatoreinrichtung nach einem der vorangehenden Ansprüche, **dadurch gekennzeichnet, dass** mehrere Dämpfungselemente (7) vorgesehen sind, welche zwischen den Kondensatorelementen (3) regelmäßig oder unregelmäßig angeordnet sind.

## Claims

1. Capacitor device (1) comprising a plurality of capacitor elements (3) which are disposed so as to be mutually adjacent and in each case comprise at least two electrodes (4) and at least one dielectric medium (5) interdisposed between the electrodes (4), wherein at least one visco-elastic damping element (7) that mechanically and acoustically separates the capacitor elements (3) is interdisposed between at least two capacitor elements (3) which are disposed so as to be mutually adjacent, **characterized in that** the damping element (7) is a loose material filling from at least one bulk material.

2. Capacitor device according to Claim 1, **characterized in that** the visco-elastic damping element (7) is formed from at least one visco-elastic material or from a plurality of different visco-elastic materials, or comprises at least one visco-elastic material or a plurality of different visco-elastic materials.

3. Capacitor device according to Claim 2, **characterized in that** a visco-elastic material is a natural and/or synthetic elastomeric material which is in particular based on an organic plastics material and/or silicone.

4. Capacitor device according to Claim 3, **characterized in that** the elastomeric material is filled with organic and/or inorganic filler materials, in particular particulate filler materials.

5. Capacitor device according to one of Claims 2 to 4, **characterized in that** a visco-elastic material is a cellular foam material.

6. Capacitor device according to Claim 5, **characterized in that** the foam material at least in part has open cells.

7. Capacitor device according to Claim 6, **characterized in that** the intermediate spaces between the cells of the foam material are at least in part filled with an isolation medium, in particular an isolation oil, which surrounds the capacitor elements (3).

8. Capacitor device according to one of Claims 2 to 7, **characterized in that** a visco-elastic material is a textile material.

9. Capacitor device according to Claim 8, **characterized in that** the textile material is a fibrous material formed from oriented or non-oriented fibres.

10. Capacitor device according to Claim 9, **characterized in that** the textile material at least in part is infused with an isolation medium, in particular an isolation oil, which surrounds the capacitor elements (3).

11. Capacitor device according to one of the preceding claims, **characterized in that** the bulk material is composed of organic and/or inorganic, in particular particulate and/or fibrous bulk products.

12. Capacitor device according to Claim 11, **characterized in that** the bulk material is received in a receptacle which is permeable to an isolation medium, in particular an isolation oil, which surrounds the capacitor elements (3).

13. Capacitor device according to one of the preceding claims, **characterized in that** a plurality of damping elements (7) which are interdisposed in a regular or irregular manner between the capacitor elements (3) are provided.

## Revendications

1. Dispositif (1) de condensateur, comprenant plusieurs éléments (3) de condensateur, disposés en étant voisins et comprenant respectivement au moins deux électrodes (4) et au moins un diélectrique (5) disposé entre les électrodes (4), dans lequel entre au moins deux éléments (3) de condensateur disposés en étant voisins est disposé au moins un élément (7) d'amortissement viscoélastique, qui sépare les éléments (3) de condensateur mécaniquement et acoustiquement, **caractérisé**
**en ce que** l'élément (7) d'amortissement est un amas de matière lâche en au moins un matériau en vrac.

2. Dispositif de condensateur suivant la revendication 1, **caractérisé en ce que** l'élément (7) d'amortissement viscoélastique est formé d'au moins un matériau viscoélastique ou de plusieurs matériaux viscoélastiques différents ou comprend au moins un matériau viscoélastique ou plusieurs matériaux viscoélastiques différents.

3. Dispositif de condensateur suivant la revendication 2, **caractérisé en ce qu'**un matériau viscoélastique est un matériau élastomère naturel et/ou synthétique, notamment à base de matière plastique organique ou de silicone.

4. Dispositif de condensateur suivant la revendication 3, **caractérisé en ce que** la matière élastomère est chargée de charges organiques et/ou minérales, notamment sous forme de particules.

5. Dispositif de condensateur suivant l'une des revendications 2 à 4, **caractérisé en ce qu'**un matériau viscoélastique est un matériau alvéolé cellulaire.

6. Dispositif de condensateur suivant la revendication 5, **caractérisé en ce que** le matériau alvéolé est au moins en partie à cellules ouvertes.

7. Dispositif de condensateur suivant la revendication 6, **caractérisé en ce que** les espaces entre les cellules du matériau alvéolé sont remplies au moins en partie d'un milieu isolant, notamment d'une huile isolante, entourant les éléments (3) de condensateur.

8. Dispositif de condensateur suivant l'une des revendications 2 à 7, **caractérisé en ce qu'**un matériau viscoélastique est un matériau textile.

9. Dispositif de condensateur suivant la revendication 8, **caractérisé en ce que** le matériau textile est un matériau textile formé de fibres ordonnées ou désordonnées.

10. Dispositif de condensateur suivant la revendication 9, **caractérisé en ce que** le matériau textile est imprégné au moins en partie d'un milieu isolant, notamment d'une huile isolante, entourant les éléments (3) de condensateur.

11. Dispositif de condensateur suivant l'une des revendications précédentes, **caractérisé en ce que** le matériau en vrac est constitué de substances en vrac organiques et/ou minérales, notamment sous forme de particules et/ou de fibres.

12. Dispositif de condensateur suivant la revendication 11, **caractérisé en ce que** le matériau en vrac est logé dans un récipient, qui est perméable à un milieu isolant, notamment une huile isolante, entourant les éléments (3) de condensateur.

13. Dispositif de condensateur suivant l'une des revendications précédentes, **caractérisé en ce qu'**il est prévu plusieurs éléments (7) d'amortissement, qui sont disposés régulièrement ou irrégulièrement entre les éléments (3) de condensateur.
